## Europäisches Patentamt
## European Patent Office
## Office européen des brevets

(19)

(11) Veröffentlichungsnummer: **0 258 487 B1**

(12) # EUROPÄISCHE PATENTSCHRIFT

(45) Veröffentlichungstag der Patentschrift: **11.09.91**

(21) Anmeldenummer: **86112317.2**

(22) Anmeldetag: **05.09.86**

(51) Int. Cl.⁵: **B01D 46/00**, B22F 9/08,
B22F 3/04, F25J 1/02,
F17C 9/02

(54) Verfahren und Vorrichtung zur Reinigung und Rückführung von Gasen.

(43) Veröffentlichungstag der Anmeldung:
**09.03.88 Patentblatt 88/10**

(45) Bekanntmachung des Hinweises auf die
Patenterteilung:
**11.09.91 Patentblatt 91/37**

(84) Benannte Vertragsstaaten:
**AT BE CH DE FR GB IT LI LU NL SE**

(56) Entgegenhaltungen:
**EP-A- 0 099 037**
**EP-A- 0 167 914**
**US-A- 4 284 394**
**US-A- 4 346 563**

(73) Patentinhaber: **Amlinger, Heinrich**
**Johann-Schmidt-Str. 12**
**W-6361 Niddatal 2(DE)**

(72) Erfinder: **Amlinger, Heinrich**
**Johann-Schmidt-Str. 12**
**W-6361 Niddatal 2(DE)**

(74) Vertreter: **Leineweber, Jürgen, Dipl.-Phys.**
**Nagelschmiedshütte 8**
**W-5000 Köln 40(DE)**

## Beschreibung

Die Erfindung bezieht sich auf ein Verfahren zur Reinigung und Rückführung von Gasen, die einer Anlage, vorzugsweise einer Anlage zur Metallpulver-Herstellung oder einer Anlage zur Kompaktierung von Metallpulver, unter erhöhtem Druck zugeführt werden und diese Anlage mit niedrigerem Druck wieder verlassen, indem das Gas in einem Kreislauf geführt wird, in welchem sich Filter zur mechanischen und/oder chemischen Reinigung der Gase und Mittel zur Druckerhöhung des Gases befinden. Außerdem bezieht sich die Erfindung auf eine für die Durchführung des Verfahrens geeignete Vorrichtung. Als Filter können Adsorber und Reaktoren für die mechanische und chemische Reinigung der Gase vorhanden sein.

Aus der europäischen Patentanmeldung EP-A-167 914 ist eine Anlage zur Metallpulver-Herstellung bekannt, die mit einem Gas-Recyclingsystem ausgerüstet ist. Um die gereinigten Gase auf den für die Metallverdüsung erforderlichen Druck (zwischen 8 und 160 bar) zu bringen, ist ein mehrstufiger Kompressor notwendig. Der Aufwand für diese Kompressoreinheit ist in bezug auf Investitions- und Betriebskosten insbesondere dann relativ hoch, wenn die zu reinigenden und zurückzuführenden Gase auf Drücke gebracht werden müssen, die den Wert 40 bar überschreiten.

Der vorliegenden Erfindung liegt die Aufgabe zugrunde, ein Verfahren sowie eine für die Durchführung des Verfahrens geeignete Vorrichtung zu schaffen, welche in bezug auf Investitionskosten weniger aufwendig ist.

Bei einem Verfahren der eingangs genannten Art wird diese Aufgabe dadurch gelöst, daß das im Kreislauf geführte, die Anlage verlassende Gas nach seiner Filterung beziehungsweise Reinigung durch Anwendung von Kälte aus siedendem Flüssigstickstoff verflüssigt wird, daß das verflüssigte Gas über eine Hochdruckpumpe einem Verdampfer zugeführt wird und daß das in dem Verdampfer in die Gasphase übergehende Gas zur Anlage zurückgeführt wird. Eine Anlage dieser Art erfordert nicht mehr den Aufwand eines mehrstufigen Kompressors. Zur Verflüssigung des Gases wird als Kältemittel flüssiger Stickstoff verwendet, der preiswert zur Verfügung steht. Eine Anlage nach der Erfindung hat zwar höhere Betriebskosten als eine Anlage mit Kompressoren, arbeitet aber wesentlich schneller gewinnbringend, da das Kostenverhältnis Flüssigstickstoff zu Argon etwa im Verhältnis 1 zu 8 steht, auf Gasbasis gerechnet. Um 1 kg Argon zu verflüssigen, werden 0,84 kg flüssiger Stickstoff benötigt.

Zur Verflüssigung des Argons ist es zweckmäßig, den als Kältemittel im Verflüssiger dienenden flüssigen Stickstoff auf einem über dem Atmosphärendruck liegenden Druck, vorzugsweise etwa 3 bar, zu halten. Bei diesem Druck hat flüssiger Stickstoff einen Siedepunkt von etwa 88 K. Diese Temperatur liegt oberhalb des Verfestigungspunktes für Argon von 84 K. Das Argon wird bei einer Temperatur von mindestens 90 bis 97 K verflüssigt. Bei diesen Temperaturen ist ein Verflüssigungsdruck von 1,3 bis 2,5 bar erforderlich. Durch die 88 K Flüssigstickstoff-Temperatur ist sichergestellt, daß sich während der Verflüssigung des Argons kein unterhalb des Atmosphärendruckes liegender Druck einstellt. Dadurch ist die Zulaufhöhe für die sich anschließende Argonförderpumpe immer über 1 bar (abs), und es entsteht in der Pumpe keine Verdampfung beziehungsweise Kavitation.

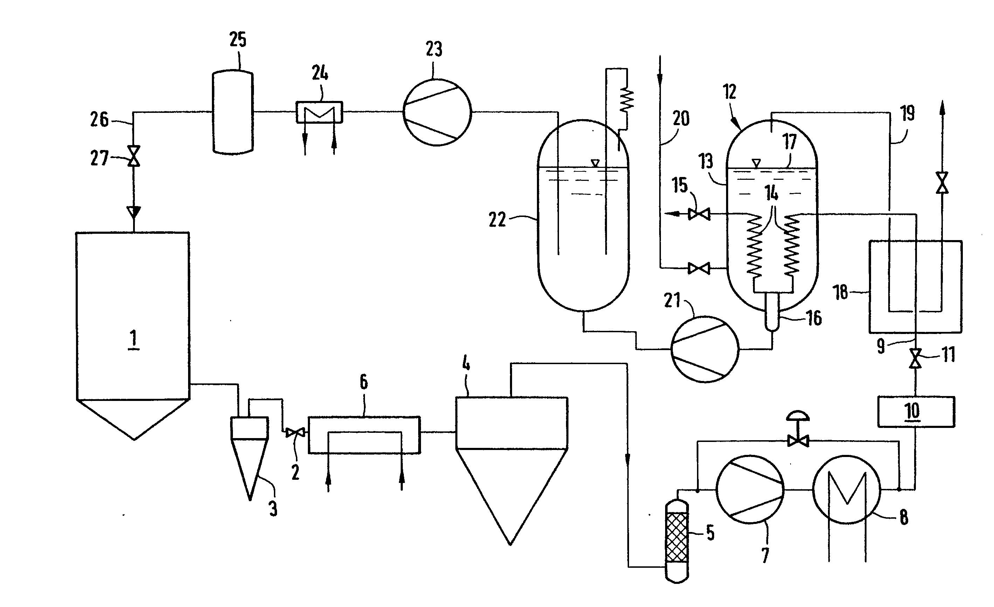

Weitere Vorteile und Einzelheiten der Erfindung sollen anhand eines in der Figur schematisch dargestellten Ausführungsbeispieles erläutert werden.

Beim dargestellten Ausführungsbeispiel ist die Anlage, der das Betriebsgas unter hohem Druck zuzuführen ist und aus der das Gas mit niedrigerem Druck austritt, mit 1 bezeichnet. Beispielsweise kann es sich um einen Turm handeln, welcher der Verdüsung flüssiger Metalle zur Herstellung eines Metallpulvers dient, oder um eine isostatische Pulverpresse. Bei der Herstellung von Pulver wird Hochdruckgas (zwischen 8 und 160 bar) über eine Düse, die sich im Turm 1 befindet, eingeleitet. In der Düse wird die abtropfende Schmelze mit dem Gas verdüst. Die Schmelzwärme des Metalls wird dabei an das Gas abgegeben. Einzelheiten sind, da Metallverdüsunsgsanlagen dieser Art an sich bekannt sind, nicht dargestellt.

Das heiße und mit Metallpulververunreinigungen beladene, den Turm 1 verlassende Gas strömt in ein Filtersystem, das aus einem Zyklon 3 und einem Zyklontaschenfilter 4 sowie einem Feinfilter 5 besteht. Hinter dem ersten Zyklon 3 sind sowohl das Ventil 2 als auch ein Gaskühler 6 angeordnet. Die beschriebenen Elemente 2 bis 6 sind den Erfordernissen der jeweiligen Anlage 1 anzupassen. Wesentlich ist, daß das Betriebsgas, bei Metallverdüsungsanlagen vorzugsweise Argon, nach dem Verlassen des Filters 5 staubfrei vorliegt.

Dem Feinfilter 5 nachgeordnet ist die Kompressionseinrichtung 7, mit der das Gas auf einen Druck von größer 1,3 bar gebracht wird. Die Kompressionseinrichtung 7 ist zweckmäßigerweise als einstufiges beziehungsweise zweistufiges Rootsgebläse ausgebildet. Zur Entfernung der Kompressionswärme schließt sich an das Gebläse 7 der Kühler 8 an.

Über die Leitung 9 mit dem Ventil 11 gelangt das Betriebsgas in den Verflüssiger 12. In der Leitung 9 kann wahlweise noch eine Gasreinigung 10 vorgeschaltet sein, um Verunreinigungen wie $O_2$, $CO_2$, $CO$, $H_2$, $H_2O$, $N_2$ zu entfernen.

Die Beschreibung einer solchen Reinigung ist aus der europäischen Patentanmeldung EP-A-167 914 ersichtlich.

Der Verflüssiger 12 umfaßt den im Behälter 13 befindlichen Verflüssigungseinsatz 14, dessen unteres Ende im Sammelgefäß 16 mündet. Im Verflüssiger 12 befindet sich flüssiger Stickstoff. Die Höhe des LN$_2$-Flüssigkeitsstandes 17 ist durch nicht dargestellte Niveauregelung derart geregelt, daß sich der Verflüssigereinsatz 14 unterhalb der Flüssigkeitsoberfläche befindet. Zur Vermeidung, daß nicht kondensierbare Gase die Verflüssigung behindern, wird eine winzige Teilmenge des zu verflüssigenden Argons mit den nicht kondensierbaren Bestandteilen über Ventil 15 aus dem Verflüssiger an die Atmosphäre abgezogen.

Dem Verflüssiger 12 vorgeschaltet ist der Kühler 18, durch den die Zuführungsleitung 9 und die Leitung 19 hindurchgeführt sind. Durch die Leitung 19 wird im Verflüssiger 12 verdampfender Stickstoff abgeführt. Der kalte Stickstoff kühlt das durch die Leitung 9 strömende zu verflüssigende Argon vor dem Eintritt in den Verflüssigereinsatz 14 ab. Mit 20 ist noch eine der Zuführung des flüssigen Stickstoffes dienende Leitung bezeichnet.

Das verflüssigte Gas wird aus dem Sammelbehälter 16 mit Hilfe der Pumpe 21 in den Vorratsbehälter 22 gefördert. Die Pumpe 21 ist als Zentrifugalpumpe ausgebildet und wird nur dann eingeschaltet, wenn das verflüssigte Gas im Sammelbehälter 16 ein bestimmtes Niveau überschreitet. Der Vorratsbehälter 22 steht unter Überdruck, beispielsweise 5 bar.

Aus dem Vorratsbehälter 22 wird das verflüssigte Betriebsgas mittels der Hochdruckpumpe 23 entnommen, auf das entsprechende Druckniveau gebracht und dem Verdampfer 24 zugeführt. Das dort bei hohem Druck in den gasförmigen Zustand überführte Betriebsgas wird im Behälter 25 unter dem gewünschten Druck gespeichert. Über die Leitung 26 mit dem Ventil 27 wird das Gas der Anlage 1 wieder zugeführt.

Um bei Argon als Betriebsgas die Funktion der Pumpe 21 stets sicherzustellen, darf der Druck im Sammelbehälter 16 den Atmosphärendruck nicht unterschreiten. Zweckmäßig ist an dieser Stelle ein leichter Überdruck zwischen 1 und 1,5 bar (abs). Dies setzt Argon-Temperaturen von etwa 87 bis 91 K voraus. Da flüssiger Stickstoff bei Atmosphärendruck eine Temperatur von etwa 77 K hat, lassen sich die erwähnten Temperaturen im Bereich des Sammelbehälters 16 nur dann erreichen, wenn das Stickstoffbad unter Druck steht, so daß der Siedepunkt zu höheren Temperaturen hin verschoben ist. Als zweckmäßige Temperatur hat sich 88 K ergeben, wenn im Sammelbehälter 16 eine Temperatur von etwa 91 K herrschen soll. Der flüssige Stickstoff im Behälter 13 nimmt eine Temperatur von etwa 88 K an, wenn das Stickstoffbad unter einem Druck von etwa 3 bar steht. Regelmechanismen, welche die Aufrechterhaltung dieses Druckes im Verflüssiger 12 sicherstellen, sind im einzelnen bekannt und deshalb nicht dargestellt.

**Patentansprüche**

1. Verfahren zur Reinigung und Rückführung von Gasen, die einer Anlage (1), zum Beispiel einer Anlage zur Metallpulverherstellung oder zur Kompaktierung von Metallpulver, unter erhöhtem Druck zugeführt werden und diese Anlage mit niedrigerem Druck wieder verlassen, indem das Gas in einen Kreislauf geführt wird, in welchem sich Filter (3 bis 5) zur mechanischen und/oder chemischen Reinigung der Gase sowie Mittel (7( zur Druckerhöhung des gereinigten Gases befinden, **dadurch gekennzeichnet,** daß das die Anlage verlassende Betriebsgas nach seiner Reinigung durch Anwendung von Kälte aus siedendem Flüssigstickstoff verflüssigt wird, daß das verflüssigte Gas über eine Hochdruckpumpe (23) einem Verdampfer (24) zugeführt wird und daß das in dem Verdampfer in die Gasphase übergehende Gas zur Anlage zurückgeführt wird.

2. Verfahren nach Anspruch 1, **dadurch gekennzeichnet,** daß das Betriebsgas nach seiner Reinigung mit einem Druck von größer als etwa 1,2 bar (vorzugsweise 1,3 bis 2,5 bar) einem Verflüssiger (12) zugeführt wird, in dessen Verflüssigereinsatz ebenfalls ein Druck größer als 1,3 bar aufrechterhalten wird.

3. Verfahren nach Anspruch 1 oder 2, **dadurch gekennzeichnet,** daß bei Argon als Betriebsgas zur Erzeugung der im Verflüssiger (12) benötigten Kälte flüssiger Stickstoff verwendet wird.

4. Verfahren nach Anspruch 3, **dadurch gekennzeichnet,** daß der flüssige Stickstoff im Verflüssiger (12) auf einem über dem Atmosphärendruck liegenden Druck, vorzugsweise etwa 3 bar, gehalten wird.

5. Verfahren nach einem der vorhergehenden Ansprüche, **dadurch gekennzeichnet,** daß das verflüssigte Betriebsgas mit Hilfe einer ersten Pumpe (21) in einen Speichertank (22) gefördert wird, in dem ein Speicherdruck von einigen Bar (zum Beispiel 5 bar) aufrechterhalten wird, und daß das verflüssigte Gas aus dem Speichertank (22) über eine zweite Pumpe (23) einem Verdampfer (24) zugeführt wird, in dem das gereinigte und verflüssigte Betriebsgas in den gasförmigen Zustand überführt wird.

6. Vorrichtung zur Durchführung des Verfahrens nach einem der vorhergehenden Ansprüche mit Vorrichtungen (3 bis 5 und/oder 10) zur Reinigung des Betriebsgases und Vorrichtungen zur Erhöhung des Druckes des Betriebsgases, **dadurch gekennzeichnet,** daß die Vorrichtungen zur Druckerhöhung des Betriebsgases einen mit flüssigem Stickstoff gekühlten Verflüssiger (12) und einen Verdampfer (24) umfassen.

7. Vorrichtung nach Anspruch 6, **dadurch gekennzeichnet,** daß dem Verflüssiger ein Kühler (18) vorgeschaltet ist, in dem ein Wärmetausch zwischen dem zu verflüssigenden Betriebsgas und aus dem Verflüssiger (12) abströmendem Stickstoff stattfindet.

8. Vorrichtung nach Anspruch 6 oder 7, **dadurch gekennzeichnet,** daß zwischen dem Verflüssiger (12) und dem Verdampfer (24) ein auf einem Zwischendruck gehaltener Speichertank (22) angeordnet ist.

9. Vorrichtung nach Anspruch 8, **dadurch gekennzeichnet,** daß zwischen dem Verflüssiger (12) und dem Speichertank (22) sowie zwischen dem Speichertank (22) und dem Verdampfer (24) jeweils eine das verflüssigte Betriebsgas fördernde und auf einen höheren Druck bringende Pumpe (21 beziehungsweise 23) angeordnet ist.

## Claims

1. A method of cleaning and recycling gases which are fed under high pressure to an installation (1), for example an installation for metal powder production or for compacting metal powder, and which then leave said installation at a lower pressure, by directing the gas into a circuit in which filters (3 to 5) for the mechanical and/or chemical cleaning of the gases and also means (7) for raising the pressure of the cleaned gas are provided, characterised in that the operating gas leaving the installation after being cleaned is liquefied by the application of cold from boiling liquid nitrogen, in that the liquefied gas is fed via a high-pressure pump (23) to a vaporiser (24), and in that the gas being converted into the gaseous phase in the vaporiser is recycled to the installation.

2. A method according to Claim 1, characterised in that, after it has been cleaned, the operating gas is fed at a pressure higher than approximately 1.2 bar (preferably 1.3 to 2.5 bar) to a condenser (12), the condenser insert of which is likewise maintained at a pressure higher than 1.3 bar .

3. A method according to Claim 1 or 2, characterised in that, in the case of argon, liquid nitrogen is used as the operating gas to create the cold required in the condenser (12).

4. A method according to Claim 3, characterised in that the liquid nitrogen is maintained in the condenser (12) at a pressure above atmospheric pressure, preferably of approximately 3 bar.

5. A method according to any one of the preceding Claims, characterised in that the liquefied operating gas is fed by means of a first pump (21) to a storage tank (22) in which a storage pressure of several bar (for example 5 bar) is maintained, and in that the liquefied gas is fed from the storage tank (22) via a second pump (23) to an vaporiser (24) in which the cleaned and liquefied operating gas is converted into the gaseous state.

6. An apparatus for carrying out the method according to any one of the preceding Claims with means (3 to 5 and/or 10) for cleaning the operating gas and means for increasing the pressure of the operating gas, characterised in that the means for increasing the pressure of the operating gas comprise a condenser (12) and a vaporiser (24).

7. An apparatus according to Claim 6, characterised in that a cooler (18) is disposed upstream of the condenser, a heat exchange between the operating gas to be liquefied and the nitrogen flowing out of the condenser (12) taking place in said cooler.

8. An apparatus according to Claim 6 or 7, characterised in that a storage tank (22) maintained at an intermediate pressure is disposed between the condenser (12) and the vaporiser (24).

9. An apparatus according to Claim 8, characterised in that pump (21) for feeding the liquefied operating gas is disposed between the condenser (12) and the storage tank (22), and a pump (23) for bringing liquefied gas to a higher pressure is disposed between the storage tank (22) and the vaporiser (24).

## Revendications

1. Procédé d'épuration et de recyclage de gaz qui sont envoyés a une installation (1), par exemple une installation de fabrication de poudres métalliques ou de compactage de poudres métalliques, sous une pression élevée et ressortent de cette installation à une pression plus basse, le gaz étant guidé dans un circuit dans lequel se trouvent des filtres (3 à 5) en vue de l'épuration mécanique et/ou chimique des gaz ainsi que des moyens (7) pour augmenter la pression du gaz épuré, caractérisé en ce que le gaz industriel quittant l'installation après son épuration, est liquéfié par utilisation du froid dégagé par de l'azote liquide en ébullition, en ce que le gaz liquéfie' est envoyé à un évaporateur (24), par une pompe haute pression (23) et en ce que le gaz, passant en phase gazeuse dans l'évaporateur, est renvoyé à l'installation.

2. Procédé selon la revendication 1, caractérisé en ce qu'après son épuration, le gaz industriel est envoyé, à une pression supérieure à 1,2 bar environ (de préférence 1,3 à 2,5 bars) à un condenseur (12) à l'intérieur duquel il est également maintenu une pression supérieure à 1,3 bar.

3. Procédé selon la revendication 1 ou 2, caractérisé en ce que dans le cas où le gaz industriel est de l'argon, on utilise de l'azote liquide pour produire le froid nécessaire dans le condenseur (12).

4. Procédé selon la revendication 3, caractérisé en ce que l'azote liquide est maintenu dans le condenseur (12) à une pression supérieure à la pression atmosphérique, de préférence à environ 3 bars.

5. Procédé selon l'une des revendications précédentes, caractérisé en ce que le gaz industriel liquéfié est envoyé, à l'aide d'une première pompe (21), dans un réservoir de stockage (22) dans lequel est maintenue une pression de stockage de quelques bars (par exemple 5 bars) et en ce que le gaz liquéfié est envoyé du réservoir de stockage (22), par l'intermédiaire d'une deuxième pompe (23), à un évaporateur (24) dans lequel le gaz industriel épuré et liquéfié passe à l'état gazeux.

6. Dispositif pour la mise en oeuvre du procédé selon l'une des revendications précédentes avec des dispositifs (3 à 5 et/ou 10) pour l'épuration du gaz industriel et des dispositifs destinés à augmenter la pression du gaz industriel, caractérisé en ce que les dispositifs d'augmentation de la pression du gaz industriel comportent un condenseur (12), refroidi avec de l'azote liquide, et un évaporateur (24).

7. Dispositif selon la revendication 6, caractérisé en ce qu'en amont du condenseur est monté un refroidisseur (18) dans lequel se produit un échange de chaleur entre le gaz industriel à liquéfier et l'azote sortant du condenseur (12).

8. Dispositif selon la revendication 6 ou 7, caractérisé en ce qu'un réservoir de stockage (22), maintenu à une pression intermédiaire, est placé entre le condenseur (12) et l'évaporateur (24).

9. Dispositif selon la revendication 8, caractérisé en ce qu'une pompe (21 ou 23), faisant circuler le gaz industriel liquéfié et l'amenant à une pression supérieure, est placée entre le condenseur (12) et le réservoir de stockage (22) ainsi qu'entre le réservoir de stockage (22) et l'évaporateur (24).

EP 0 258 487 B1